# EUROPÄISCHE PATENTANMELDUNG

(11) **EP 2 756 817 A1**
(43) Veröffentlichungstag der Anmeldung: **23.07.2014**
(21) Anmeldenummer: 13152261.7
(22) Anmeldetag: 22.01.2013
(51) Int. Cl.: A61C 8/00, A61C 9/00, A61C 13/00

(54) **Verfahren zum Erstellen eines virtuellen, für die Mundsituation eines Patienten charakteristischen dreidimensionalen Ganzkiefermodells und Markierkörper zur Verwendung in dem Verfahren**

(71) Anmelder: Lange, Axel, 42899 Remscheid (DE)
(72) Erfinder: LANGE, Dr. Axel, 42899 Remscheid (DE)
(74) Vertreter: Kugler, Jörg

(57) **Zusammenfassung**

Die Erfindung betrifft ein Verfahren zum Erstellen eines virtuellen, für die Mundsituation eines Patienten charakteristischen dreidimensionalen Ganzkiefermodells (30, 32), bei dem eine Mehrzahl von jeweils einen Teilabschnitt der Mundsituation wiedergebenden Teildatensätzen erfasst wird, die durch Überlagerung zum Ganzkiefermodell (30, 32) zusammengesetzt werden. Erfindungsgemäß ist dabei vorgesehen, dass die Überlagerung der Teildatensätze anhand einer Anzahl von in den Patientenmund eingesetzten, jeweils einen zylinderförmigen Referenzkörper (16) aufweisenden Markierkörpern (10) vorgenommen wird.

## Beschreibung

Die Erfindung betrifft ein Verfahren zum Erstellen eines virtuellen, für die Mundsituation eines Patienten charakteristischen dreidimensionalen Ganzkiefermodells, bei dem eine Mehrzahl von jeweils einen Teilabschnitt der Mundsituation wiedergebenden Teildatensätzen erfasst wird, die durch Überlagerung zum Ganzkiefermodell zusammengesetzt werden. Sie betrifft weiterhin einen zur Verwendung in dem Verfahren geeigneten Markierkörper.

Bei der Versorgung eines Patienten mit Zahnersatz oder anderen prothetischen Versorgungen können beispielsweise Kronen, Brücken oder andere Versorgungen zum Einsatz kommen und beispielsweise mit Hilfe von Dentalimplantaten in den Patientenmund eingebracht werden. Im Hinblick auf das üblicherweise gewünschte harmonische und optisch und ästhetisch hochwertige Gesamtbild wird die zahntechnische Versorgung oder der jeweilige Zahnersatz dabei individualisiert und angepasst an die jeweilige Mundsituation des Patienten hergestellt.

Um dies zu ermöglichen, müssen zur Vorbereitung einer passgenauen Anfertigung des jeweiligen Zahnersatzes oder auch, bei der Verwendung von Dentalimplantaten nach der Einbringung des Implantats und vorzugsweise nach der Einheilung der Pfostenteile, die räumlichen und geometrischen Informationen der Restbezahnung (beispielsweise Antagonisten, mesial und distal der Insertionsstelle stehende Zähne), der Schleimhaut und gegebenenfalls des Pfostenteils oder Implantats oder des montierten Aufbauteils erfasst werden. Diese räumlichen und geometrischen Informationen sind insbesondere notwendig, um die Krone, Brücke oder dergleichen passgenau und anatomisch optimiert im Hinblick auf die Eingliederung in die vorhandene Restbezahnung zu fertigen. Zu diesem Zweck wird üblicherweise in der Art einer traditionellen Behandlung eine so genannte Abformung, vorzugsweise aus Silikon oder einem anderen dentalen Abformmaterial, von der Mundsituation angefertigt. Diese Abformung wird vorzugsweise mit Gips oder einem anderen dentalen Modellwerkstoff ausgegossen. Das dabei entstehende Gipsmodell ist somit ein Positivmodell oder Duplikat der Mundsituation des Patienten/der Patientin. Es liefert dem Zahnarzt und/oder dem Zahntechniker die Informationen über die Position der Restbezahnung, der Schleimhaut und gegebenenfalls des inserierten Pfostenteils oder Implantats.

Bei der Anfertigung der Abformung wird ein geeignetes, in der Regel elastomeres Abformmaterial üblicherweise in ein geeignetes, auch als "Löffel" bezeichnetes Behältnis gegeben, das dann auf den abzuformenden Zahnbereich im Patientenmund gedrückt wird. Während des Aushärtens des Abformmaterials muss der Löffel ruhig gehalten werden, um Fehler bei der Abdrucknahme zu vermeiden. Dieser Vorgang ist vergleichsweise zeitaufwendig und auch für den Patienten häufig sehr unangenehm, insbesondere im Hinblick auf die erforderlichen Stillhaltephasen.

In moderneren zahntechnischen Konzepten wird daher diese Abdrucknahme ersetzt durch digitalisierte, üblicherweise auf der CAD-Technologie basierende Verfahren, bei der die so genannte intraorale Datenabnahme oder ein so genannter intraoraler Scan zum Einsatz kommt. Hierbei erfolgt die Gestaltung des jeweiligen Modells oder auch des eigentlichen Zahnersatzes nicht mehr anhand der Abformung und des aus dieser gewonnenen Positivmodells, sondern virtuell. Um dies zu ermöglichen, muss zunächst ein dreidimensionaler digitaler Datensatz erstellt werden, der die Mundsituation des Patienten zumindest im jeweils relevanten Bereich, also in der Umgebung des herzustellenden Zahnersatzes, hinreichend genau wiedergibt.

Die Erstellung dieses dreidimensionalen Datensatzes erfolgt über das intraorale Scannen. Dabei werden üblicherweise bifokale Kamerasysteme oder laserbasierte Systeme eingesetzt, durch die die dreidimensionalen Datensätze erstellt werden. Auf Grund des üblicherweise begrenzten Erfassungsbereichs dieser Systeme werden dabei in der Regel Teildatensätze erfasst, die jeweils einen dem Bildbereich der jeweiligen Kamera entsprechenden Teilabschnitt der Mundsituation wiedergeben. Diese Teildatensätze werden anschließend überlagert, so dass aus dieser Überlagerung die gesamte Mundsituation des Patienten wiedergegeben und somit ein für die Mundsituation des Patienten charakteristisches virtuelles Ganzkiefermodell erstellt werden kann.

Im Hinblick auf die angestrebte hohe Qualität und Passform des herzustellenden Zahnersatzes ist es unter anderem erforderlich, auch bei dieser Überlagerung der Teildatensätze zum Ganzkiefermodell eine besonders hohe Genauigkeit sicherzustellen. Die Überlagerung erfolgt daher üblicherweise unter Rückgriff auf die Messpunkte der noch existierenden Restbezahnung, da die vorhandenen Zähne eine eindeutige Identifizierung ermöglichen und somit als geeignete Referenzpunkte dienen können. Aus diesem Grunde ist eine zuverlässige Überlagerung der Teildatensätze aber für größere Bereiche ohne Restbezahnung nur sehr bedingt möglich. Der Einsatzbereich existierender intraoraler Scansysteme ist somit nur begrenzt.

Der Erfindung liegt daher die Aufgabe zu Grunde, ein Verfahren zum Erstellen eines virtuellen, für die Mundsituation eines Patienten charakteristischen dreidimensionalen Ganzkiefermodells der oben genannten Art anzugeben, mit dem eine besonders hohe Genauigkeit des Modells auch bei der Erfassung zahnloser Bereiche sichergestellt werden kann.

Diese Aufgabe wird erfindungsgemäß gelöst, indem die Überlagerung der Teildatensätze anhand einer Anzahl von in den Patientenmund eingesetzten, jeweils einen Referenzkörper aufweisenden Markierkörpern vorgenommen wird, wobei der Referenzkörper jeweils eine kreisförmige umlaufende Kante aufweist.

Vorteilhafte Ausgestaltungen der Erfindung sind Gegenstand der Unteransprüche.

Die Erfindung geht von der Überlegung aus, dass der Einsatzbereich existierender intraoraler Scansysteme im Wesentlichen durch die zahnlosen Bereiche limitiert wird, da diese keine ausreichenden Referenzpunkte für eine ausreichend genaue Überlagerung der jeweiligen Teildatensätze liefern. Insbesondere ist in zahnlosen Bereichen eine zuverlässige Überlagerung der Teildatensätze in der Regel nicht möglich, da die Schleimhaut nicht ausreichend markante Punkte liefert. Um dem zu begegnen, sollten bedarfsweise, also vorzugsweise in Bereichen mit größeren zahnlosen Arealen, künstliche Referenzpunkte geschaffen werden, anhand derer die gewünschte Überlagerung der Teildatensätze vorgenommen werden kann. Bei der Bereitstellung derartiger, künstlich geschaffener Referenzpunkte sollte einerseits berücksichtigt werden, dass sie nicht allzu groß in Höhe und Fläche sein sollten, um nicht zu viel Fläche des zahnlosen Bereichs zu überdecken und damit erneute Ungenauigkeiten bei der Erfassung zu produzieren. Andererseits sollte aber auch berücksichtigt werden, dass die geometrische Form und Dimensionierung der Referenz- oder Markierkörper hinreichend charakteristisch sein sollte, um eine zuverlässige Zuordnung zu gewährleisten. Wie sich überraschend herausgestellt hat, ist hierfür eine kreisförmige umlaufende Kante am Referenzkörper eine besonders gute Basis, da diese auch bei variierender Betrachtungsrichtung gleichartig aussieht und somit zuverlässig erfassbar ist.

Insbesondere ist aber eine zylindrische Grundform des jeweiligen Referenzkörpers zur Erreichung dieser Auslegungsziele besonders geeignet und somit besonders bevorzugt. Der Referenzkörper weist besonders bevorzugt eine kreisförmige Stirnfläche auf, deren Kante dabei die genannte umlaufende Kante bildet. Beispielsweise könnte der Referenzkörper dazu in der Art eines Kegelstumpfs ausgeführt sein.

Dabei ist insbesondere die zylindrische Grundform einerseits geometrisch einfach und klar genug, so dass eine zuverlässige automatisierte Erkennung erfolgen kann. Zudem weist sie auf besonders einfache Weise eine vergleichsweise leicht identifizierbare Vorzugsrichtung, nämlich entlang der Zylinderachse, auf, so dass auch bei Unsicherheiten bei der Justierung der jeweiligen Kamera eine zuverlässige Bestimmung der Orientierung erfolgen kann. Nach der erfolgten Überlagerung der Teildatensätze kann zudem der Formbeitrag der Markierkörper vergleichsweise einfach aus dem Datensatz gelöscht und dieser somit bereinigt werden.

Vorteilhafterweise wird zur Erfassung der Teildatensätze ein bildgebendes Verfahren, insbesondere Laserabtastung oder ein CCD-Verfahren eingesetzt.

Eine besonders hohe Genauigkeit bei der Datenerfassung und -weiterverarbeitung ist bei besonders gering gehaltenem Aufwand erreichbar, indem in besonders vorteilhafter Ausgestaltung als Markierkörper Akupunktur-Nadeln, vorzugsweise Permanent-Akupunkturnadeln, verwendet werden. Diese weisen im Kopfbereich einen geeigneten, zylindrisch geformten Referenzkörper bei ansonsten hinreichend kleiner Gesamtgröße auf und erfüllen somit das genannte Kriterium der umlaufenden Kante besonders gut. Der Referenzkörper wird von einem Ankerteil getragen, das sich nach dem Einsetzen im Patientenmund in der Schleimhaut festhakt, so dass eine für die Durchführung der Erfassung ausreichende räumliche Fixierung auf besonders einfache Weise erreichbar ist und die Gefahr des Verschluckens besonders gering gehalten werden kann. Zudem sind die als Markierkörper vorgesehenen Akupunkturnadeln zum Einsatz im oder am menschlichen Körper durch das Medizin-Produkte-Gesetz freigegeben und somit diesbezüglich nicht bedenklich.

Ein zur Verwendung in dem vorstehend erläuterten Verfahren besonders geeigneter Markierkörper, dessen Ausgestaltung als eigenständig erfinderisches Konzept angesehen wird, umfasst vorzugsweise einen Ankerteil, der einen eine kreisförmige umlaufende Kante aufweisenden Referenzkörper trägt. Durch diese Ausgestaltung ist erreicht, dass über den Ankerteil eine Einbringung und zumindest vorübergehende örtliche Fixierung des Markierkörpers im Patientenmund, insbesondere durch Verankerung in der Schleimhaut, erreicht werden kann, ohne dass hierzu eine mechanische Fixierung an oder mittels der verbliebenen Restbezahnung erforderlich wäre. Vorzugsweise ist der Ankerteil dabei in der Form einer nadelartigen Spitze mit einer Anzahl von endseitig angeordneten Widerhaken oder dergleichen ausgestaltet, wie dies beispielsweise für Akupunktur-Nadeln der Fall ist.

Vorteilhafterweise ist der Referenzkörper dabei zylinderförmig ausgeführt, wobei die Stirnfläche des Zylinders die kreisförmige umlaufende Kante bildet.

Der Ankerteil, der somit für eine zuverlässige örtliche Fixierung des Markierkörpers sorgt, so dass dieser als Referenzpunkt für den intraoralen Scan verwendet werden kann, trägt dabei den zylinderförmigen Referenzkörper. Durch die Ausgestaltung des Referenzkörpers als Zylinderkörper ist dabei erreicht, dass auch unter unterschiedlichen Blickwinkeln eine zuverlässige Erfassung und Identifizierung des Referenzkörpers im jeweils erfassten Teildatensatz sichergestellt ist, insbesondere da der Zylinderkörper durch seine runde Außenkontur auch aus verschiedenen äußeren Blickwinkeln dieselbe, leicht identifizierbare Raumform aufweist. In Ergänzung hierzu kann die Stirn- oder Endfläche des Zylinderkörpers ebenfalls vergleichsweise einfach als solche identifiziert und zugeordnet werden, so dass auch diesbezüglich und in Längsrichtung des Zylinderkörpers gesehen auf vergleichsweise zuverlässige und einfache Weise eine definierte Positionszuordnung ermöglicht ist.

Vorteilhafterweise ist als Markierkörper dabei eine Permanent-Akupunktur-Nadel vorgesehen. Diese können vergleichsweise einfach in die Schleimhaut eingebracht und dort verankert werden, da sie in ihrem Fußbereich oder Ankerteil entsprechende Vorrichtungen aufweisen. Derartige Akupunktur-Nadeln sind zudem nicht verschiebbar, eben weil sie sich in der Schleimhaut festhaken. Der Kopf derartiger Akupunktur-Nadeln ist zylinderförmig ausgestaltet und kann somit als Referenzkörper genutzt werden. Durch diese Form bieten die Akupunktur-Nadeln bei vergleichsweise geringer Gesamtgröße einen ausreichend markanten Punkt für die Identifizierung und Zuordnung bei der Datenverarbeitung.

Die mit der Erfindung erzielten Vorteile bestehen insbesondere darin, dass durch die Verwendung von künstlich in den Patientenmund eingebrachten Markierkörpern mit vorzugsweise zylindrischem Referenzkörper auf zuverlässige und einfache Weise geeignete Markierpunkte gesetzt werden können, die in den erfassten Teildatensätzen zuverlässig und einfach als solche erkennbar sind und damit zugeordnet werden können. Somit ist durch diese Markierkörper unabhängig von der Mund- oder Zahnsituation im erfassten Raumbereich eine zuverlässige Überlagerung der Teildatensätze miteinander unter Rückgriff auf diese Markierkörper ermöglicht. Hinsichtlich des erfassbaren Raumbereichs ist ein solcher intraoraler Scan somit nicht limitiert auf Bereiche, in denen auf vorhandene Restbezahnung zurückgegriffen werden kann, sondern es können auch zahnlose Areale zuverlässig erfasst und zu einem Ganzkiefermodell zusammengesetzt werden. Damit ist durch die Verwendung der Markierkörper die Erstellung zuverlässiger und hoch genauer Ganzkiefermodelle durch intraorale Scans insbesondere auch unter Rückgriff auf existierende, mit einem begrenzten Bilderfassungsbereich ausgestatteter Kamerasysteme oder bildgebende Systeme möglich, selbst wenn in der Mundsituation des Patienten größere zahnlose Areale von beispielsweise vier Zähnen oder mehr vorliegen.

Ein Ausführungsbeispiel der Erfindung wird anhand einer Zeichnung näher erläutert. Darin zeigen:
- FIG. 1: schematisch ein System zur Erstellung eines intraoralen Scans,
- FIG. 2: einen Markierkörper,
- FIG. 3: ein virtuelles 3D-Modell der Mundsituation eines Patienten, und
- FIG. 4: das virtuelle 3D-Modell gemäß FIG. 3 nach einer Datenaufbereitung.

Gleiche Teile sind in allen Figuren mit denselben Bezugszeichen versehen.

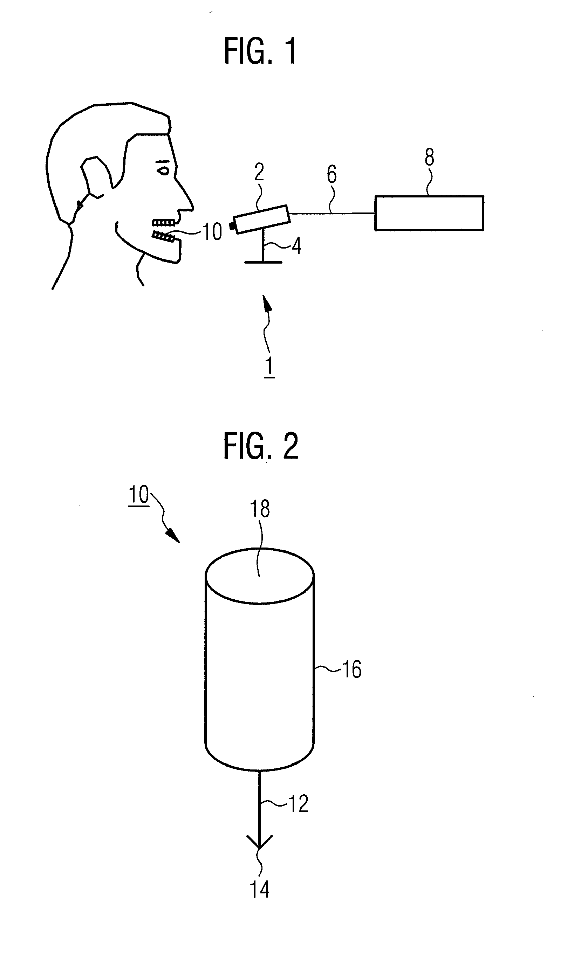

Das System 1 gemäß FIG. 1 ist zum Erstellen eines virtuellen, für die Mundsituation eines Patienten charakteristischen dreidimensionalen Ganzkiefermodells durch intraoralen Scan vorgesehen. Dazu umfasst das System 1 eine Anzahl von Bilderfassungsgeräten, von denen im Ausführungsbeispiel lediglich eine Kamera 2 dargestellt ist. Es können aber selbstverständlich auch noch weitere Kameras oder auch andere geeignete bildgebende Systeme vorgesehen sein. Beispielsweise kommen die Systeme "Cerec Omnicam, "Itero", "LAVA C.O.S.", "3Shape Intraoral Scanner" oder gleichartige Systeme zum Einsatz. Um dabei bei der Datenerfassung Ungenauigkeiten zu vermeiden und eine hochpräzise Abtastung zu ermöglichen, ist die Kamera 2 im Ausführungsbeispiel an einer lediglich symbolisch dargestellten Tragstruktur 4 örtlich fixiert. Datenseitig ist die Kamera 2 über eine Datenleitung 6 mit einer Datenverarbeitungsanlage 8 verbunden.

Bei der Erfassung der für die Mundsituation des Patienten charakteristischen Daten tastet die Kamera 2 den jeweiligen Mundbereich des Patienten optisch ab. Auf Grund des räumlich begrenzten Bildausschnitts der Kamera 2 ist dabei aber lediglich die Erfassung eines Teilabschnitts der Mundsituation des Patienten pro Arbeitsgang möglich. Dementsprechend erfasst die Kamera 2 jeweils einen Teildatensatz, der einen Teilabschnitt der Mundsituation des Patienten wiedergibt, wobei die Größe dieses Teilabschnitts durch den Bildausschnitt der Kamera 2 limitiert ist. Nach der Erfassung eines Teildatensatzes verändert der Patient seine Position relativ zur Kamera 2, so dass der Bildausschnitt der Kamera 2 nunmehr einen anderen Teilabschnitt der Mundsituation erfassen kann. Anschließend wird ein weiterer Teildatensatz erfasst, und dieser Vorgang wird so lange wiederholt, bis der vollständige zu erfassende Bereich der Mundsituation des Patienten abgetastet wurde.

Die dabei erhaltenen Teildatensätze werden der Datenverarbeitungsanlage 8 zugeführt und dort zur Bildung des Ganzkiefermodells der Mundsituation des Patienten durch Überlagerung zusammengesetzt. Eine zuverlässige und hochgenaue Überlagerung von Teildatensätzen setzt dabei voraus, dass auf geeignete Referenz- oder Markierungspunkte zurückgegriffen werden kann, die eine korrekte Zuordnung der Teildatensätze zueinander ermöglicht. In Arealen, bei denen eine Restbezahnung im Patientenmund vorliegt, können diese Zähne als Referenzpunkte verwendet werden, da diese in der Regel ausreichend charakteristische Konturen für eine Verwendung als Markierungspunkt aufweisen.

Das System 1 ist aber spezifisch auch für die Erstellung intraoraler Scans in den Fällen ausgestaltet, in denen die vorhandene Restbezahnung im Patientenmund zumindest abschnittsweise nicht ausreicht, um als Markierungspunkte für die Überlagerung der Teildatensätze genutzt zu werden. Dazu umfasst das System 1 eine Anzahl von Markierkörpern 10, von denen einer beispielhaft in FIG. 2 dargestellt ist. Jeder Markierkörper 10 ist dabei gezielt dafür ausgestaltet, vorübergehend im Patientenmund verankert zu werden, so dass er anschließend bei der Erstellung des intraoralen Scans als Markier- oder Referenzpunkt zur zuverlässigen und hochgenauen Überlagerung der Teildatensätze verwendet werden kann. Die hochgenaue Überlagerung der Teildatensätze wird dabei durch zwei Aspekte wesentlich begünstigt, nämlich einerseits durch die prägnante räumliche Struktur der Markierungspunkte 10, die eine zuverlässige Identifizierung bei der Datenbearbeitung erlaubt, und andererseits durch eine gegebenenfalls vorgesehene vergleichsweise weit voneinander beabstandete Platzierung der Markierkörper 10. Durch vergleichsweise große Abstände der durch die Markierkörper 10 gegebenen Messpunkte kann nämlich eine besonders geringe relative Messungenauigkeit erreicht werden.

Der Markierkörper 10, der im Ausführungsbeispiel als Permanent-Akupunktur-Nadel ausgestaltet ist, wie er beispielsweise unter der Bezeichnung "MOXOM Medical Acupuncture Needle SP-X" aus Stahl oder vergoldet erhältlich ist, weist ein Ankerteil 12 auf, mit dem er zumindest vorübergehend örtlich in der Mundschleimhaut fixierbar ist. Dazu ist der Ankerteil 12 nadelartig in Form einer länglichen Spitze ausgestaltet, wobei endseitig zur Fixierung in der Schleimhaut eine Anzahl von Widerhaken 14 angeordnet ist. Der Ankerteil 12 trägt einen Referenzkörper 16, der als Orientierungspunkt für die Überlagerung der Teildatensätze dienen soll und gezielt eine hierfür besonders geeignete räumliche Form aufweist.

Dazu ist der Referenzkörper 16 als Zylinderkörper oder zylinderförmig ausgestaltet. Durch diese zylindrische Grundform ist gewährleistet, dass der Referenzkörper 16 selbst bei vergleichsweise geringer Größe eine charakteristische, vergleichsweise leicht zu identifizierende Raumform aufweist, die auf Grund der runden Kontur selbst aus verschiedenen Blickwinkeln vergleichbar ist. Zudem bedingt die obere Stirnfläche 18 des zylinderförmigen Referenzkörpers 16, die eine kreisförmige umlaufende Kante 20 bildet, eine vergleichsweise markante Signatur im jeweils erfassten Bild, so dass auch sie besonders einfach und zuverlässig erkannt werden kann. Somit ist in Längsrichtung des zylinderförmigen Referenzkörpers 16 gesehen eine eindeutige Zuordnung der Positionierung ermöglicht.

Bei der Erfassung des intraoralen Scans werden Permanent-Akupunktur-Nadeln zur Verwendung als Markierkörper 10 in die Mundschleimhaut des Patienten eingesetzt. Insbesondere in zahnlosen Abschnitten werden die Permanent-Akupunktur-Nadeln dabei in Abständen von mindestens 10 mm bis zwei Drittel des Scan-Bereichs, was in etwa einer molaren Breite eines unteren Molaren entspricht, zueinander eingesetzt. Zusätzlich können bedarfsweise auch noch weitere Permanent-Akupunktur-Nadeln als zusätzliche Markierkörper 10 in Bereichen eingesetzt werden, in denen eigentlich noch ausreichend Restbezahnung vorliegt. Beispielsweise kann ein derartiger Markierungspunkt vestibulär zwischen den mittleren Schneidezähnen gesetzt und anschließend mitgescannt werden, um auch in diesen Bereichen die Überlagerung der Teilabschnitte zu erleichtern.

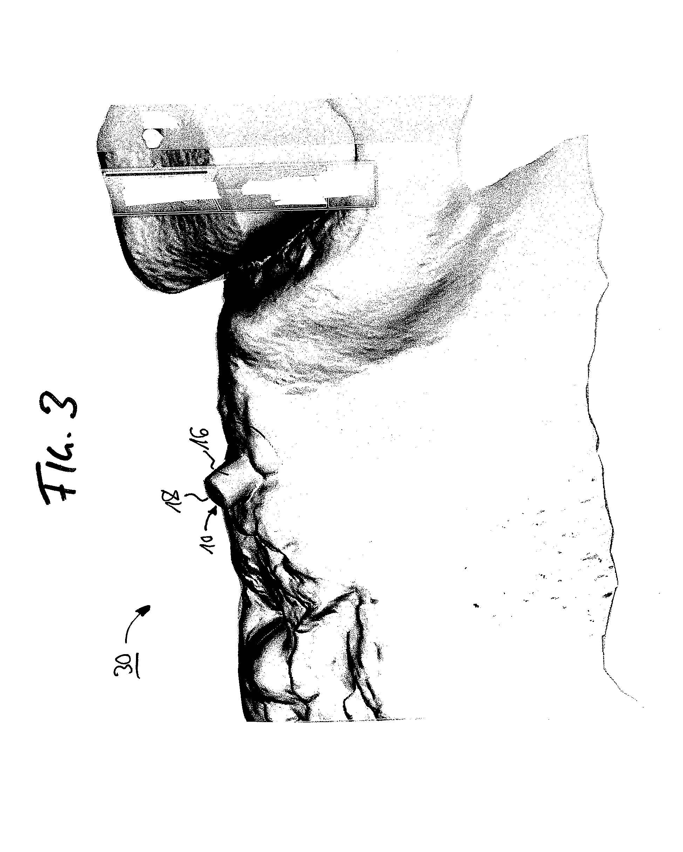

In FIG. 3 ist ein Beispiel für ein mit intraoralem Scanverfahren erhältliches 3D-Modell der Mundsituation des Patienten gezeigt. FIG. 3 zeigt dabei ausschnittsweise einen Teilabschnitt eines virtuellen, dreidimensionalen Ganzkiefermodells 30, das für die Mundsituation des Patienten charakteristisch ist. Der in FIG. 3 gezeigte Ausschnitt gibt dabei einen Bereich wieder, der aus der Überlagerung von zwei für benachbarte Teilabschnitte charakteristischen Teildatensätzen erhalten wurde.

Bei der Überlagerung der Teildatensätze wurde dabei auf den in FIG. 3 deutlich erkennbaren zylindrischen Referenzkörper 16 eines Markierkörpers 10 der vorstehend beschriebenen Art zurückgegriffen. Der zylindrische Referenzkörper 16 ist dabei auf Grund seiner räumlichen Form eindeutig als solcher identifizierbar, wobei zusätzlich auch seine obere Endfläche 18 eindeutig erkennbar ist. Der den zylindrischen Referenzkörper 16 aufweisende Markierkörper 10 ist somit in beiden Teildatensätzen eindeutig identifizierbar und kann somit als Orientierungspunkt für eine zuverlässige Überlagerung der Teildatensätze verwendet werden.

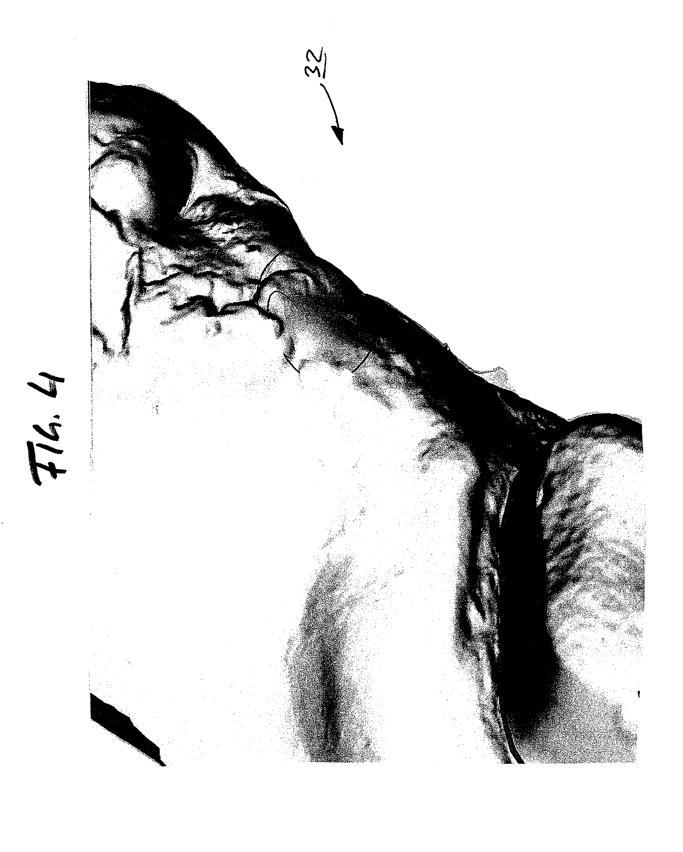

Nach der in FIG. 3 ausschnittsweise und beispielhaft widergegebenen Überlagerung der Teildatensätze zum Ganzkiefermodell 30 kann dieses noch weiter nachbearbeitet werden, indem die Signatur des künstlich eingebrachten Markierkörpers 10 mit Mitteln herkömmlicher Datenverarbeitung wieder entfernt wird. Damit kann das Ganzkiefermodell 30 nachkorrigiert werden, so dass es die Signaturen der Markierungspunkte 10 nicht länger aufweist. Ein Beispiel für ein derartig nachbearbeitetes Ganzkiefermodell 32 ist in FIG. 4 gezeigt.

### Bezugszeichenliste

- 1: System
- 2: Kamera
- 4: Tragstruktur
- 6: Datenleitung
- 8: Datenverarbeitungsanlage
- 10: Markierkörper
- 12: Ankerteil
- 14: Widerhaken
- 16: Referenzkörper
- 18: Stirnfläche
- 20: Kante
- 30, 32: Ganzkiefermodell

## Patentansprüche

1. Verfahren zum Erstellen eines virtuellen, für die Mundsituation eines Patienten charakteristischen dreidimensionalen Ganzkiefermodells (30, 32), bei dem eine Mehrzahl von jeweils einen Teilabschnitt der Mundsituation wiedergebenden Teildatensätzen erfasst wird, die durch Überlagerung zum Ganzkiefermodell (30, 32) zusammengesetzt werden, wobei die Überlagerung der Teildatensätze anhand einer Anzahl von in den Patientenmund eingesetzten, jeweils einen eine kreisförmige umlaufende Kante aufweisenden Referenzkörper (16) umfassenden Markierkörpern (10) vorgenommen wird.

2. Verfahren nach Anspruch 1, bei dem zur Erfassung der Teildatensätze ein bildgebendes Verfahren, vorzugsweise Laserabtastung oder CCD, verwendet wird.

3. Verfahren nach Anspruch 1 oder 2, bei dem als Markierkörper (10) Akupunktur-Nadeln verwendet werden.

4. Markierkörper (10) zur Verwendung in einem Verfahren nach einem der Ansprüche 1 bis 3, mit einem Ankerteil (12), der einen Referenzkörper (16) mit einer kreisförmigen umlaufenden Kante (20) trägt.

5. Markierungskörper (10) nach Anspruch 4, dessen Referenzkörper (16) zylinderförmig ausgeführt ist.
